# EUROPEAN PATENT APPLICATION

(11) **EP 1 291 546 A1**
(43) Date of publication of application: **12.03.2003**
(21) Application number: 02722300.7
(22) Date of filing: 15.04.2002
(51) Int. Cl.: F16F 9/02, A47C 3/30

(54) **SYSTEM FOR ACTUATING A GAS DAMPER**

(30) Priority: 16.04.2001 ES 200100872; 09.05.2001 ES 200101058; 05.12.2001 ES 200102714
(71) Applicant: GAIN GAS TECHNIQUE, S.L., 20100 Lezo (Gipuzkoa) (ES)
(72) Inventor: BARANDIARAN SALABERRIA, Javier, E-20013 San Sebastian (ES)
(74) Representative: Urteaga Simarro, José Antonio
(86) International application number: PCT/ES02/00182
(87) International publication number: WO 02/084140

(57) **Abstract**

A gas-filled cylinder, with two concentric cylindrical bodies (1, 2) that determine an intermediate duct (3) and are separated by a shaft cap and a valve cap that allow the passage of gas towards the interior, in which a piston (6) moves and forms two chambers (4, 5). The gas passes from one chamber to the other when the valve shaft (13) is operated. This valve shaft is of considerable length and can be operated by means of small movements.

## Description

This invention relates to a gas-filled cylinder, of the type which are composed of two concentric cylindrical bodies separated by an intermediate chamber and held in this position by two caps or plugs, a valve cap and a shaft cap, which are secured to the outer cylindrical body and which control the ends of the inner cylindrical body.

Both caps are provided with passageways that communicate the space in the inner cylindrical body with the intermediate chamber.

The valve shaft passes through the valve cap and the cylinder shaft passes through the shaft cap, and the cylinder shaft has a head by way of a piston that moves inside the inner cylindrical body, thus forming two chambers, above and below the said head or piston.

The gas occupies the internal space at one or the other side of the said head, passing from one chamber to the other through the previously mentioned passageways in the caps, when the valve shaft is operated from the exterior.

In order to provide these passageways, the valve shaft includes a dynamic ring seal, which, when the said shaft is operated from the exterior, allows the gas to passage from the upper chamber to the lower one through the space between the two cylindrical bodies.

Types of cylinders with these characteristics are known are known through references FR-A-2,661,229 and EP-A-00964282.2 in favour of the applicant itself.

In these references, the valve cap and the shaft cap are conceives by means of the union of components which can be coupled together, and between which the passageways for the gas to pass from one chamber to the other are formed.

In the same way, the valve shaft is elongated and protrudes outside the cylinder, and is also provided with a dynamic ring seal that closes or opens over the front of the lower part among those that make up the valve cap, so that when the shaft moves due to its being operated from the exterior, the passage of gas is opened from the upper intermediate chamber between the cylindrical bodies.

The operation of the said shaft from the exterior is usually carried out by means of a lever, which provides sufficient power movement to move the valve shaft without any problem in order to adjust the position of the cylinder shaft.

More recently, however, the technique of using push-buttons, switches, etc. to operate the valve shaft is becoming more widespread, with which the force to be applied through the user's finger must be considerably lower than is traditional, of about 1.5 to 1.7 kg. which leads to shaft traverses or strokes which are ver limited, for instance of the order of 1.5 to 2 mm.

This trend has brought about a variation in the traditional arrangements of the movement of the valve shaft, because on many occasions its movements are carried out based on cables or wires operated by the previously mentioned push-buttons.

Therefore, the said axial movements have become lateral or circular movements, thanks to the pivoting of the valve shaft when it is operated by the exterior control.

One object of the invention is to provide a gas-filled cylinder whose valve shaft is empowered to provide the passage of the gas with its own slight movements, whether in a lateral direction or circular direction or axial linear direction, with an extraordinary increase in the sensitivity of the shaft when it is operated from the exterior.

Another object of the invention is to provide a gas-filled cylinder which is easy to manufacture and economical to produce.

Another object of the invention is to provide a gas-filled cylinder that enables its fast assembly in an outer body for the application of any method of shaft operation.

In order to put these objectives into practice, the cylinder uses a valve cap composed of three components, upper, middle and lower, appropriately assembled together as suggested in EP-A-00964282.3, so that the passage of gas from the inner chamber to the intermediate chamber takes place between the middle and lower components.

The valve shaft in the case of this invention passes through the centres of the three bodies of the valve with the total absence of physical support contact with any of them, but only with a separating ring seal, which does not hinder or alter the free movement of the said shaft.

The seal in question is situated above the chamber between bodies of the valve, through which the passage of gas that comes from the space between cylinders and towards the inner chamber of the cylinder takes place.

The valve shaft is finished off at its inner end by an opening-closing ring seal against a housing in the lower front part of the lower part of the cap.

Logically, the internal diameters of the three bodies of the valve are carried out with a dimension which is greater than the dimension of the valve shaft diameter.

The dynamic ring seal at the inner end of the valve shaft, which opens or closes over the front of the lower part of the cap, is mounted on a small neck provided in the proximity of the free end of the said shaft, with this neck being provided with two portions of different diameters.

In the upper and larger diameter portion of the neck, an approximately trunco-conical metallic bushing is situated, whose smaller base is supported on the edge which is formed, above, by the valve shaft itself, as well as a ring seal supported on the larger lower base of the said metallic bushing, with the diameter of this seal being larger than the dimension of the diameter of the larger base of the metallic bushing.

On the lower portion of the neck, which is smaller in diameter, a washer is placed.

The ring seal remains axially controlled, therefore, between the metallic bushing and the washer, because the free lower end of the valve shaft is riveted onto the washer itself.

This washer has a slightly smaller diameter than the diameter of the portion of the lower part of the cap which is housed on the smaller cylindrical body of the cylinder, so that it does not make contact with the inner surface of the said cylindrical body.

The ring seal is received in a ring-shaped slot cut in the front of the lower part of the valve cap, with this slot being trunco-conical in shape, and the metallic bushing is received in the interior of the hole in the said lower part of the cap.

In normal conditions of the cylinder, the valve shaft occupies a perfectly longitudinal position in accordance with the axial axis of the said cylinder. On the one hand, as there is no external action on it from the exterior, the pressure of the gas in the inner chamber acts against the washer, which cuts off the passage of the gas with its ring seal.

When there is any operation on the outer end of the shaft, the movement caused might have a very small stroke, given that the length of the arm of the lever to the position of the seal and washer is considerable, with the result that the washer tilts and the seal opens the duct, with which the movement of the cylinder shaft takes place.

When this tilting takes place, the washer is inclined and becomes partially supported on the outer front of the inner part of the valve cap, the same as the ring seal in its contact with the trunco-conical slot in the said lower part.

The gas is transferred then from the upper inner chamber of the cylinder to the passage created, and through the space between the valve shaft and the valve itself, moving into the space between cylinders and from there to the lower inner chamber of the gas-filled cylinder.

In this movement, the trunco-conical metallic bushing arranged on the ring seal does not obstruct the passage of the gas, because the diameter of its larger end, which is the lower one, is smaller than that of the seal.

To facilitate the assembly of the cylinder with regard to the item to be adjusted, for example a chair, the assistance of an auxiliary element by way of a cylindrical boss is used, and receives the end of the cylinder that holds the projection on the valve shaft.

Inserted into this boss is a transversal plate provided with limiting transversal play through corresponding windows cut in the side surface of the said boss, close to one of its ends.

The transversal plate is provided with a centred hole in which the projection on the valve shaft is inserted on housing the gas-filled cylinder in the interior of the boss with a certain adjustment.

With this arrangement, the operator who assembles the unit in the item to be adjusted only has to connect one of the projections from the plate to the operating device in question, with which the operation becomes considerably simplified, both as regards assembly time and the ease with which this assembly is carried out.

All these and other details of the invention can be observed in greater detail by referring to the accompanying sheets of drawings, where the following are represented:
- Figure 1 is an elevation of a gas-filled cylinder in accordance with the invention, in its rest position.
- Figure 2 corresponds to the cylinder shown in Figure 1, with the valve shaft operated.
- Figures 3 and 4 represent the upper portion of the cylinder shown in Figure 1, enlarged for purposes of greater understanding.
- Figure 5 represents a breakdown of the valve shaft, with the metallic bushing, the ring seal and the washer, in accordance with the invention.
- Figure 6 shows the assembly of the components in Figure 5.
- Figure 7 is an enlarged view, in breakdown form, of the interrelationship between the valve shaft and the set of component parts, in accordance with the invention.
- Figure 8 shows the assembly of the components in Figure 7.
- Figures 9, 10 and 11 represent the assembly bushing for the gas-filled cylinder in an elevation view, a side view of the elevation and a perspective view of the receiver plate for the projecting end of the valve shaft.

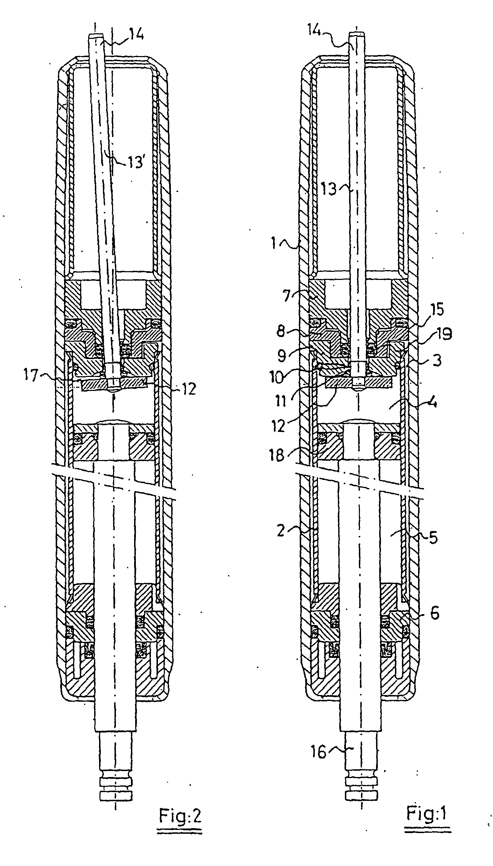

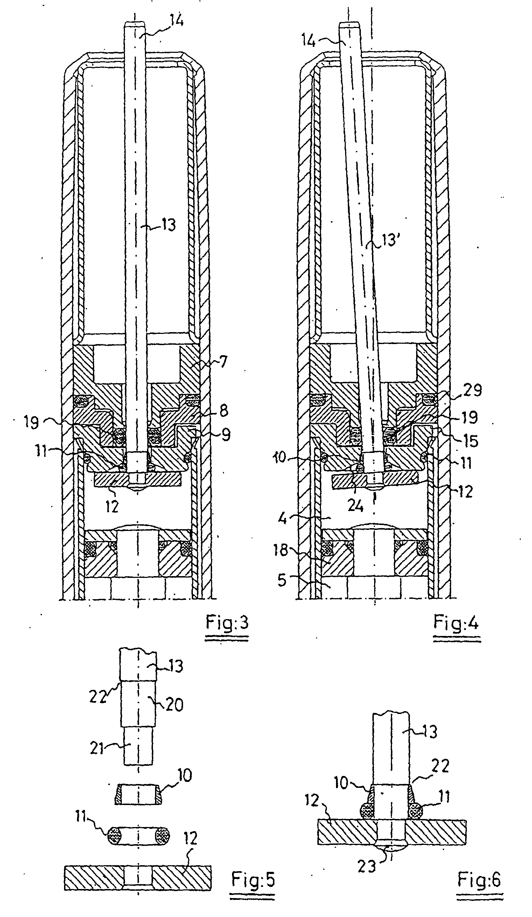

In accordance with Figures 1 and 3, we emphasis a gas-filled cylinder, with its two concentric tubes (1, 2) separated by a gas passage chamber (3). Both cylinders are separated by the valves (7, 8, 9 and 6) that enable the gas to pass between the internal chambers (4, 5) separated by the piston (18) connected to the cylinder shaft (16). In this position, the set of mechanisms are at rest as the gas passage (15) of the valve (7, 8, 9) is closed by the ring seal (11) pressed by the washer (12) against the ring-shaped slot (24) in the body (9) of the valve. This position is permanent while the outer end (14) of the valve shaft (13) is not operated.

The valve shaft (13) passes comfortably through the cavity provided by the parts (7, 8, 9) of the valve and in the interior, it is clasped by the inner ring seal (19), which adapts to the shaft and prevents the passage of gas upwards at all times.

The shaft (13) is finished off at its inner end by the bushing (10), the ring seal (11) and the washer (12). The bushing is housed in the cylindrical cavity in the part (9) of the valve, the ring seal (11) in the ring-shaped slot (24) of the said part (9) and the washer (12) is supported on the outer front of the said part (9).

If, as shown in Figures 2 and 4, the end (14) of the shaft (13) is moved from the exterior, the arm of the lever that extends from this end to the washer (12) with minimum displacement, it makes this washer tilt, together with the seal (11) and the bushing (10), leaving a space (17) through which the gas passes from the inner chamber (4) to the gas passage (15) and from there to the space between the cylinders (3) until it reaches the shaft cap (6) that makes this gas reach the lower chamber (5). The piston (18) moves and the shaft (16) of the cylinder is moved.

To do this, the seal (11) has separated partially from its total contact with the ring-shaped slot (24) and the metallic bushing (10), thanks to its specific shape, allows the gas to pass upwards. As the gas can not go past the inner seal (19) of the valve (7, 8, 9), it goes unfailingly towards the gas passage (15).

In accordance with Figure 5, we can verify that the inner end of the shaft (13) is configured with two stepped areas (20, 21) and an edge (22). The metallic bushing (10) and the seal (11) are established on the stepped area (20), whereas the end washer (12) is established on the other stepped area (21).

The assembly, Figure 6, shows how the bushing is controlled by the edge (22) that limits it, and in turn is supported on the seal (11). The trunco-conical shape of the bushing (10) is such that its larger lower side is of a smaller diameter than the outer diameter of the seal, with the seal protruding from the bushing, as can be appreciated.

The later riveting of the free end (23) of the portion (21) of the shaft (13) means that the seal becomes perfectly controlled between the bushing and the washer.

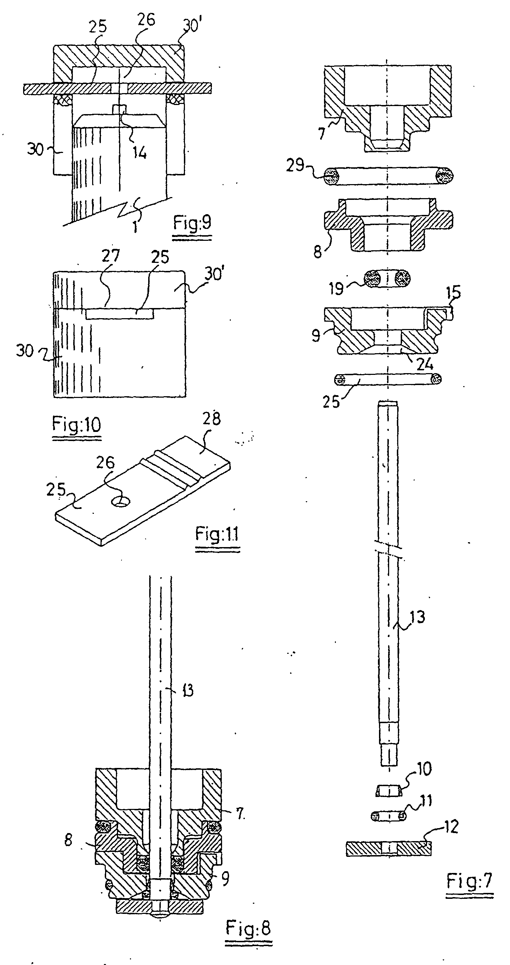

In Figure 7 we can observe the breakdown of the valve unit with its parts, the top (7), the seal (29) between the top and the body (8), which adjusts to the interior of the tube (1), the seal (19) that clasps the shaft (13) and the lower body (9) that includes the gas passage.

Below the latter we can observe the seal (25) which is supported on the interior on the inner tube (2), the shaft (13), the metallic bushing (10), the ring seal (11) and the washer (12).

The assembly of these components is expressly defined in Figure 8, showing the unit with the shaft (13) in the rest position.

Once the cylinder has been configured as described, its assembly is facilitated in accordance with contents of Figures 9, 10 and 11.

In order to do this, the end of the cylinder from which the valve shaft (14) projects is housed in the boss (30) provided with the lid (30'), with a certain amount of adjustment, until it reaches the plate (25) arranged transversally and provided with a hole (26) that receives the projection (14). It can be appreciated that this plate moves in the interior of the boss and can protrude from the outer side surface in order to facilitate its prior positioning so that the hole occupies a centred position.

Therefore, it is sufficient to insert the cylinder so that the projection (14) is housed in the hole (26) in the plate (25).

Once this insertion has been carried out, the operator responsible for assembling the element to be adjusted simply has to fix the means of connection to the plate so that the cylinder operates.

The plate (25) is provided with means of any kind that limit its transversal movements in the grooves (27) and prevent the plate from coming out, for example, some appropriately spaced ridges (28) that allow the transversal play, as shown in Figure 11.

## Claims

1. Gas-filled cylinder, with two concentric cylinders (1, 2) that provide an intermediate gas passage chamber (3), a upper set of valves made of three bodies (7, 8, 9) assembled together, that hold between them an inner ring seal (19) through which the valve shaft (13) passes, with this valve shaft being elongated and protruding to the exterior of the cylinder so that it can be operated from the said exterior, with the inner end of the shaft (13) including a washer (12) which is supported on the upper part (9) of the valve unit (7, 8, 9) with a ring seal (11) received in a slot (24), in that the cylinder includes a lower valve assembly (6) and a cylinder shaft (16) with a piston (18) housed in the inner tube (2) that provides two inner chambers (4, 5), with the gas passing from one to the other through the intermediate space (3) through the through the two valve seals, which is **characterised by**,
- the valve shaft (13) has a diameter which is smaller than the inner diameter of the component parts (7, 8, 9) of the valve, moving without physical support on these parts, with support being established by the seating itself of the washer (12) on the front of the lower end part (9) holding the ring seal (11) that closes the gas passage in the frontal trunco-conical slot (24) in the said part (9),
- the upper end of the cylinder from which the projection (14) on the valve shaft (13) protrudes, is housed in the interior of a cylindrical boss (30), in which a transversal plate (25) provided with a hole (26) is situated, in order to receive the projection (14), in that the plate protrudes towards the exterior of the boss so that it can be connected to the means of operation of the projection and is provided with lateral movement with open grooves (27) cut in the side surface of the boss.

2. Gas-filled cylinder, in accordance with claim 1, **characterised in that** the closing ring seal (11) is controlled on the shaft (13), between the end washer (12) and a trunco-conical metallic bushing (10).
